Europäisches Patentamt

(19) European Patent Office

Office européen des brevets

(11) Publication number: **0 314 526**
A2

# EUROPEAN PATENT APPLICATION

(21) Application number: 88310234.5

(22) Date of filing: 31.10.88

(51) Int. Cl.⁴: **B 60 J 7/04**
B 62 D 33/08

(30) Priority: 30.10.87 GB 8725438

(43) Date of publication of application:
03.05.89 Bulletin 89/18

(84) Designated Contracting States:
BE DE ES FR GB IT NL

(71) Applicant: YORK TRAILER COMPANY LIMITED
Yafforth Road
Northallerton North Yorkshire, DL7 8UE (GB)

(72) Inventor: Davis, Robert Clive Browning
Luton House134 Front Street Sowerby
Thirsk North Yorkshire, YO7 1JJ (GB)

(74) Representative: Allen, Oliver John Richard et al
Lloyd Wise, Tregear & Co. Norman House 105-109 Strand
London, WC2R 0AE (GB)

(54) Improvements in trailers and semi-trailers with lifting roofs.

(57) A trailer, semi-trailer or van body having a lifting roof wherein the body has vertical corner pillars in which a stake rail is telescopically engaged, the upper end of the stake rails engaging the roof or roof bearing member, means being provided to raise the stake rail and hence the roof relative to the fixed corner pillars.

EP 0 314 526 A2

Bundesdruckerei Berlin

## Description

### Improvements in Trailers and Semi-trailers With Lifting Roofs

The invention relates to apparatus for raising the roof of trailers, semi-trailers or van bodies.

It has been proposed to provide trailers and semi-trailers with lifting roofs. This facilitates easier loading and also allows the trailer to accomodate high capacity, low weight back loads while still complying with the legal height and weight requirements for such trailers.

A trailer with a lifting roof in accordnce with one aspect of the invention has corner posts on the trailer frame comprising a vertical pillar and a vertical stake rail for engagement with the roof or roof bearing member, the stake rail conforming to the shape of the pillar and being dimensioned to fit therein, means being provided to raise the stake rail (and hence the roof) relative to the pillar rail.

Preferably each pillar and stake rail have a substantially C-shaped cross-section. The stake rail may be provided with additional portions to support other attachments such as, for example, an aerofoil as described in our co-pending Application No 87/25540 or a folding shutter as described in our co-pending Application No 87/25439.

The stake rail may be the same height as the pillar but is preferably only half its height so as to extend from the mid-point of the pillar to the top of the pillar when the stake rail is in the lowered position.

Preferably the stake rails do not engage the roof directly but engage a lifting header which runs between the front corners (similarly the rear corners) of the trailer and to which the roof is attached. When the stake rails are in their lowered position the lifting header may rest on a fixed header which is attached to and extends between the corner pillars across the back and front walls of the trailer. The rear fixed and lifting headers may be shaped to contain therebetween a folding shutter as described in our co-pending Application No 87/25439.

A bolt or the like is preferably fixed to the stake rail, the free end of which protrudes through and rides in a vertical slot formed in the pillar. Preferably the slot is about 16 inches long. When the stake rail is in the lowered position the bolt rests at the bottom of the slot. To raise the stake rail, and hence the roof, an upward force must be applied to the bolt so that it moves to the top of the slot in the pillar and carries the stake rail with it.

Preferably the means to raise the stake rail within the pillar comprises a cable which fits around the protruding end of the bolt and which is arranged to be pulled through a pulley system.

preferably the mechanism by which the cable is pulled through the system of pulleys comprises a fixed member, a pivoting member and an air spring mounted therebetween, the ends of the cable being associated with the pivoting member.

The fixed member may suitably be a block projecting from a first horizontal bar mounted to the chassis of the trailer. The pivoting member may be a flange member projecting from a second horizontal bar, pivotally mounted to the trailer chassis and parallel to the first bar.

Preferably the ends of the pivoting horizontal bar are provided with radially extending members the outer ends of which are connected to one end of cables which run to all four corners of the trailer, then around pulleys at both the lower and upper corners of the pillars and so to the bolt attached to the stake rail.

Preferably the air spring is expanded by air supplied from an air tank already fitted to the vehicle to supply the suspension system or brakes in accordance with the teaching from previous Application No

To operate the roof lifting apparatus in accordance with the invention the air spring is expanded with air to engage and pivot the pivoting member on the trailer chassis. As a result the radially extending members on the end of the pivoting horizontal bar which are linked to the cables are also pivoted and so pull the cables through the pulleys to raise the stake rails and thus the roof.

A trailer roof lifting mechanism in accordance with another aspect of the invention comprises a fixed member, a pivoting member and an air spring mounted therebetween wherein the fixed member is a block or the like projecting from a fixed part on the trailer chassis and the pivoting member is a flange extending from a horizontal bar pivotally mounted on the trailer chassis, cables, which on pulling effect the raising of the roof, being connected to the outer ends of members extending radially out from the pivoting bar so that an expansion of the air spring, the resultant pivoting of the pivoting bar causes the cables to be pulled and the roof to be raised.

The invention will now be described by way of example with reference to the accompanying drawings in which:

Figure 1 is a perspective view of the frame of a trailer with an embodiment of roof lifting apparatus in accordance with the invention;

Figure 2 is a view of the corner post from the side of the trailer, showing the pulley and cable for raising the stake rail; and

Figure 3 is a perspective view of the roof raising mechanism in accordance with the invention.

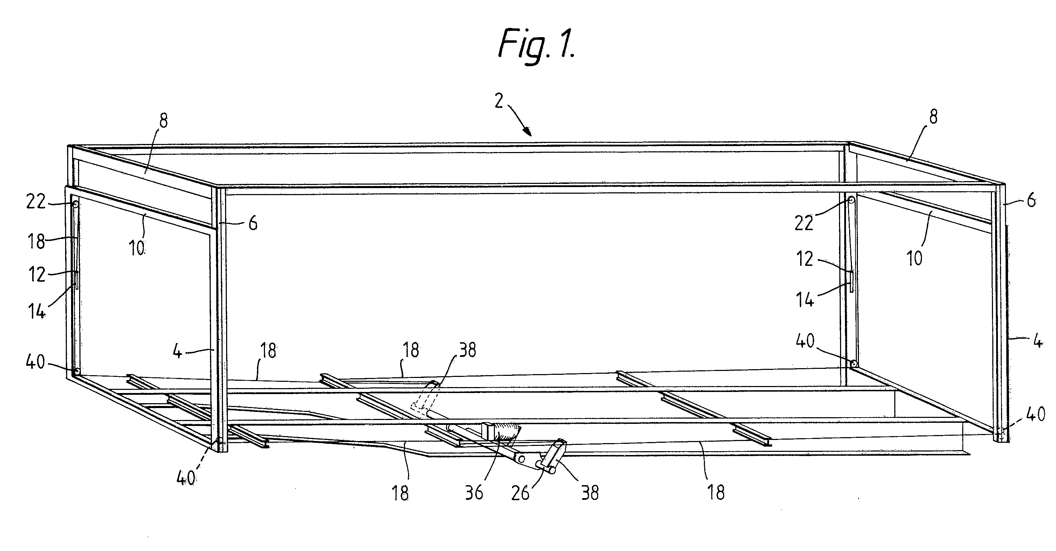

Referring to Figure 1 the frame of the trailer 2 has corner posts comprising a pillar 4 and a stake rail 6. The pillar 4 and stake rail 6 are shaped to conform to one another, the stake rail being sized to fit within the pillar. Both the pillar and the stake rail have a substantially C-shaped cross-section.

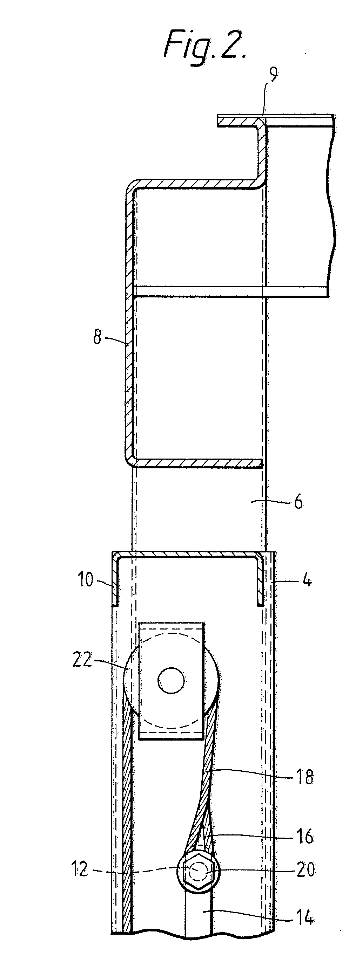

The top of the stake rail 4 engages a lifting header 8 which extends between the front corner posts along the front face of the trailer. A similar header extends between the rear corner posts along the back face of the trailer. The lifting headers 8 support the roof 9 (see Figure 2).

Each stake rail 6 is attached to the pillar 4 by means of a bolt 12 which protrudes through and runs in a vertical slot 14 formed in the pillar 4.

As seen in Figure 2 the free end of the bolt 12 protruding through the slot 14 engages a loop 16 in the end of a cable 18 and is secured in position by a second nut 20. The cable 18 passes over a pulley 22 fitted adjacent to the top of the pillar 4.

When the stake rails 6 and roof 9 are in the lowered position the bolts 12 are at the bottom of the slots 14. On pulling the cable the bolts 12 and hence the stake rails 6 are raised with respect to the pillars 4 until the bolts 12 reach the top of the slots 14.

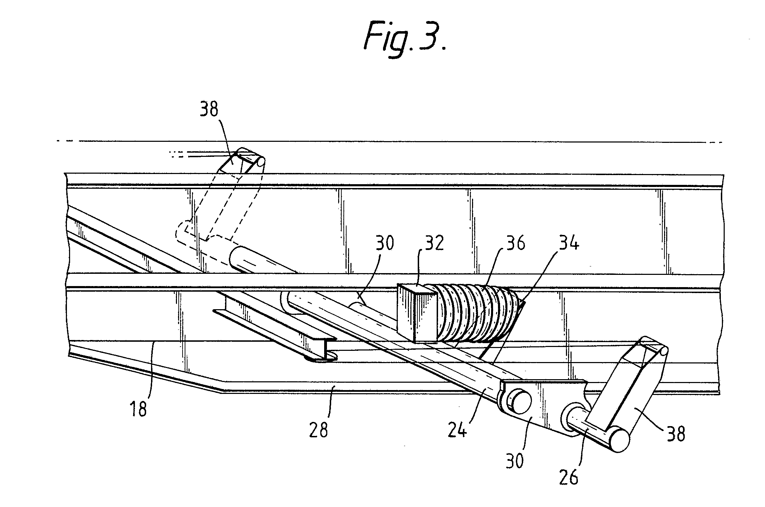

The apparatus by which the cable is pulled at each corner of the trailer is shown in Figure 3.

Two parallel horizontal bars 24 and 26 are attached at each end to the chassis 28 of the trailer by means of mounting brackets 30. The bar 24 is welded to the brackets 30 so as to be fixed with respect to the chassis 28 and has at its centre an upwardly projecting block 32.

The bar 26 is pivotally mounted in the bracket 30 and supports at its centre an upwardly projecting flange 34.

Between the block 32 and the flange 34 an air spring 36 is positioned. The ends of the bar 26 each have radially extending members 38. Two cables 18 are linked to each member, 38, one of which runs to the front corner of the trailer and one which runs to the back. At the bottom corners of the trailer, each cable passes around a pulley 40 (shown in Figure 1) and then up to the pulley 22 mounted adjacent the top of the pillar 4.

To operate the roof raising mechanism the air spring 36 is expanded with air which is supplied from an air tank already fitted to the vehicle. This proceedure may be controlled from the cab of the vehicle. Expansion of the air spring 36 causes the flange 34, to pivot away from the fixed block 32 thus also pivoting the bar 26 and the member 38. This has the effect of pulling the cables 18 which run through the pulleys 40 and 22 so lifting the stake rails 4 and hence the roof.

## Claims

1. A trailer, semi-trailer or van body having a lifting roof wherein the body has vertical corner pillars in which a stake rail is telescopically engaged, the upper end of the stake rails engaging the roof or roof bearing member, means being provided to raise the stake rail and hence the roof relative to the fixed corner pillars.

2. A trailer or the like as claimed in Claim 1 wherein each pillar and corresponding stake rail has a substantially C-shaped cross section.

3. A trailer or the like as claimed in either Claim 1 or 2 wherein the stake rail is only half the height of the corner pillar so that, when it is in its lowered position, it extends from about the mid point of the pillar to the top of the pillar.

4. A trailer or the like as claimed in any of the preceding Claims wherein each of the front and rear stake rails engage one end respectively of two lifting headers one connecting the front corners and the other the rear corners of the roof to which each is connected.

5. A trailer or the like as claimed in Claim 4 in which the arrangement is such that when the stake rails are in their lowered position, each roof or lifting header rests on a fixed header which is fixed to, and extends between, the corner pillars at the back and front of the trailer respectively.

6. A trailer or the like as claimed in any of the preceding Claims wherein a bolt or the like is fixed adjacent the bottom end of the stake rail, the front end of the bolt or the like extending through and riding in a vertical slot formed in the corresponding corner pillar.

7. A trailer or the like as claimed in any of the preceding Claims wherein the means to raise the stake rail and hence the roof comprises a cable connected to the stake rail and which is arranged to be driven through a system of pulleys comprising a fixed member, a pivoting member and an air spring mounted therebetween, the ends of the cable being associated with the pivoting member.

8. A trailer or the like as claimed in Claim 7 wherein the fixed member has a free end extending from a horizontal bar mounted to the chassis of the trailer, the pivoting member being a flange member projecting from a second horizontal bar pivotally mounted to the trailer chassis parallel to the first bar.

9. A trailer or the like as claimed in Claim 8 wherein the ends of the pivoting horizontal bar are provided with radially extending members, the outer ends of which are connected to one end of cables which run to all four corners of the trailer, around pulleys at both the lower and upper corner of the pillars and to a member attached to each stake rail.

10. A trailer or the like as claimed in any of Claims 7 to 9 wherein the air spring is expanded by air supplied from an air tank already fitted to the vehicle to supply the suspension system or brakes.

11. A trailer or the like as claimed in any of the Claims 1 to 6 wherein the means to raise the stake rail and hence the roof, comprises a fixed member, a pivoting member and an air spring mounted therebetween wherein the fixed member is a block or the like projecting from a fixed part on the trailer chassis and the pivoting member is a flange extending from a horizontal bar pivotally mounted on the trailer chassis, and cables, which on pulling, effect the raising of the roof and which are connected to the outer ends of members extending radially out from the pivoting bar so that on expansion of the air spring, the resultant pivoting of the pivoting bar causes the cables to be pulled and the roof to be raised.

*Fig.1.*

EP 0 314 526 A2

## Fig.2.

## Fig.3.